# EUROPEAN PATENT APPLICATION

(11) **EP 3 978 572 A1**
(43) Date of publication of application: **06.04.2022**
(21) Application number: 20815042.5
(22) Date of filing: 01.05.2020
(51) Int. Cl.: C08L 101/00, C08L 63/00, C08J 5/24

(54) **MOLDING MATERIAL, SHEET MOLDING COMPOUND, AND MOLDED ARTICLE**

(30) Priority: 28.05.2019 JP 2019099343
(71) Applicant: DIC Corporation, Tokyo 174-8520 (JP)
(72) Inventor: HITOMI Kazutoshi, Takaishi-shi, Osaka 592-0001 (JP); HAMADA Kenichi, Takaishi-shi, Osaka 592-0001 (JP); KIMURA Makoto, Ichihara-shi, Chiba 290-8585 (JP)
(74) Representative: TBK
(86) International application number: PCT/JP2020/018380
(87) International publication number: WO 2020/241180

(57) **Abstract**

[Problem] To provide a molding material which uses, as essential raw materials, (A) an aromatic epoxy resin, (B) a curing agent for epoxy resins, and (C) a curing accelerator, and which has a ratio of transmittance at 910 cm⁻¹ to transmittance at 1510 cm⁻¹ (910 cm⁻¹/1510 cm⁻¹) in FT-IR ATR measurement in the range of 1 to 3.

[Means for Resolution] Since the molding material exhibits excellent productivity, moldability and the like, the molding material can be suitably used in automobile members, railway vehicle members, aerospace vehicle members, watercraft members, housing equipment members, sports members, light vehicle members, construction civil engineering members, and exteriors and structures of office automation equipment, etc.

## Description

### Technical Field

The present invention relates to a molding material, a sheet molding compound, and a molded article.

The present application claims priority based on Japanese Patent Application No. 2019-099343 filed in Japan on May 28, 2019, the contents of which are incorporated herein by reference.

### Background Art

So-called FRP, in which a thermosetting resin is reinforced with a fiber-reinforced material, is used in various fields such as industrial parts, housing equipment members, and automobile members. Furthermore, a fiber-reinforced resin composite material reinforced with thermosetting resins such as epoxy resin and unsaturated polyester resin using carbon fibers as fiber-reinforced materials are attracting attention for their excellent heat resistance and mechanical strength while being lightweight, and its use in various structures is expanding. In addition, since discontinuous fibers are used as the fiber-reinforced material, comparing with continuous fibers, the range of application of the molded shape is wider, the scraps can be reused, and different material members can be inserted. Due to the productivity and a wide range of design application, a sheet molding compound (hereinafter abbreviated as SMC) is widely used. Currently SMC made of unsaturated polyester resin and vinyl ester resin, which are generally known as thermosetting resins for SMC, has problems such as discharge of volatile organic compounds. For this reason, SMC using an epoxy resin is being studied.

As the SMC containing an epoxy resin as a main component, an epoxy resin composition and a molding material containing an aromatic epoxy resin, an alicyclic diamine, a curing agent for an epoxy resin, and an aliphatic epoxy resin as an essential component are known (see, for example, Patent Literature 1). Although the molding material has excellent storage stability, it has a problem of a low melt viscosity and excessive resin flowing out from the fiber-reinforced material, and a problem of productivity that the thickening process of the epoxy resin composition takes several days.

### Citation List

### Patent Literature

PTL 1: JP-A-2018-66026

### Summary of Invention

### Technical Problem

An object to be solved by the invention is to provide a molding material, a sheet molding compound, and a molded article thereof, which have excellent viscosity thickening property, moderate compressive hardness, and excellent productivity such as storage stability, film peelability, and curability during molding.

### Solution to Problem

The inventors of the invention have found that the above problems can be solved by a specific molding material containing an aromatic epoxy resin, a curing agent for epoxy resin, and a curing accelerator as essential raw materials, and have completed the invention.

That is, the invention relates to a molding material which uses, as essential raw materials, (A) an aromatic epoxy resin, (B) a curing agent for epoxy resins, and (C) a curing accelerator, and which has a ratio of transmittance at 910 cm⁻¹ to transmittance at 1510 cm⁻¹ (910 cm⁻¹/1510 cm⁻¹) in FT-IR ATR measurement in the range of 1 to 3.

### Advantageous Effects of Invention

Since the molding material, the sheet molding compound and the molded article obtained from the invention have excellent productivity, moldability and the like, they can be suitably used in automobile members, railway vehicle members, aerospace vehicle members, watercraft members, housing equipment members, sports members, light vehicle members, construction civil engineering members, and exteriors and structures of office automation equipment, etc. Description of Embodiments

The molding material of the invention is a molding material which uses, as essential raw materials, (A) an aromatic epoxy resin, (B) a curing agent for epoxy resins, and (C) a curing accelerator, and which has a ratio of transmittance at 910 cm⁻¹ to transmittance at 1510 cm⁻¹ (910 cm⁻¹/1510 cm⁻¹) (hereinafter abbreviated as "transmittance ratio α") in FT-IR ATR measurement in the range of 1 to 3. Further, the molding material of the invention is a molding material which contains a thickener of an epoxy resin composition, which uses, as essential raw materials, (A) an aromatic epoxy resin, (B) a curing agent for epoxy resins, and (C) a curing accelerator, wherein the thickener has a transmittance ratio α at 910 cm⁻¹ and 1510 cm⁻¹ in FT-IR ATR measurement in the range of 1 to 3.

The transmittance in the FT-IR ATR measurement of the invention is obtained from peak values of a transmission spectrum. The peak near 910 cm⁻¹ is a peak derived from an epoxy group, and the peak near 1510 cm⁻¹ is a peak derived from a benzene ring.

It is important that the transmittance ratio α is in the range of 1 to 3. When it is smaller than 1, it will result in too low compressive hardness and poor handleability, and the film peelability and curability at the time of molding are also insufficient. On the other hand, when the transmittance ratio α is greater than 3, it will result in too high compressive hardness and poor handleability.

Examples of the aromatic epoxy resin (A) include bisphenol type epoxy resin such as bisphenol A type epoxy resin, bisphenol F type epoxy resin, bisphenol fluorene type epoxy resin, and biscresol fluorene type epoxy resin, novolak type epoxy resin such as phenol novolak type epoxy resin and cresol novolak type epoxy resin, glycidyl ether of phenol such as brominated epoxy resin of these resins, diglycidyl ether of alkylene oxide adduct of bisphenol A, and glycidyl ester such as phthalic acid diglycidyl ester and diglycidyl-p-oxybenzoic acid. These epoxy resins may be used alone or in combination of two or more. However, from the viewpoint of more excellent balance between viscosity and heat resistance, it is preferable to use a bifunctional aromatic epoxy resin (A') and a trifunctional or higher functional aromatic epoxy resin (A") in combination, and it is more preferable that the mass ratio (A'/A") of the epoxy resin (A') and the epoxy resin (A") is in the range of 20/80 to 80/20.

The number average molecular weight of the aromatic epoxy resin (A) is preferably 50 to 1,000, more preferably 100 to 500, from the viewpoint of further improving the impregnability to the fiber-reinforced material.

The epoxy equivalent of the epoxy resin (A) is preferably in the range of 150 to 1500 g/eq, more preferably in the range of 170 to 500 g/eq, from the viewpoint of further improving the handleability and the strength of the molded article.

The viscosity of the epoxy resin (A') is preferably in the range of 500 to 50,000 mPa·s, more preferably in the range of 1,000 to 30,000 mPa·s at a temperature of 25°C from the viewpoint of further improving the handleability and impregnability to the fiber-reinforced material. In addition, the viscosity of the epoxy resin (A") is preferably in the range of 500 to 300,000 mPa·s, more preferably in the range of 1,000 to 200,000 mPa·s at a temperature of 50°C from the viewpoint of further improving the handleability and impregnability to the fiber-reinforced material.

In addition, other epoxy resins other than the aromatic epoxy resin (A) may be used in the molding material of the invention.

Examples of other epoxy resins include oxazolidone-modified epoxy resins, glycidyl ethers of polyhydric alcohols such as trimethylolpropantriglycidyl ethers and diglycidyl ethers of bisphenol A hydride, alicyclic epoxy resins, tetrahydrophthalic acid diglycidyl esters, dimer acid glycidyl esters, triglycidyl isocyanurate, glycidyl amine type epoxy resins such as tetraglycidyl diaminodiphenylmethane, triglycidyl-p-aminophenol, and N, N-diglycidyl aniline, and heterocyclic epoxy resins such as trisphenol methane type epoxy resins. These other epoxy resins may be used alone or in combination of two or more.

Further, when the epoxy resin (A) is used, it is preferable to use an epoxy diluent in combination from the viewpoint of making it easier to adjust the viscosity and the epoxy equivalent.

The viscosity of the epoxy diluents is preferably in the range of 1 to 3,000 mPa·s, more preferably in the range of 1 to 1,000 mPa·s, from the viewpoint of further improving the impregnability of the molding material to the fiber-reinforced material.

Examples of the epoxy diluent include phenyl glycidyl ether, alcohol glycidyl ether, alkyl glycidyl ether, alkyl glycidyl ester, α-olefin epoxiside, alkylphenyl glycidyl ether, and alkylphenol glycidyl ether. Here, the alkyl group is preferably a linear or branched alkyl group having 1 to 20 carbon atoms.

Among these epoxy diluents, it is preferable to use phenyl glycidyl ether, alcohol glycidyl ether, alkyl glycidyl ether, and alkylphenyl glycidyl ether from the viewpoint of a lower viscosity and easier adjustment of the viscosity of the composition. From the viewpoint of heat resistance, it is preferable to use a polyfunctional aromatic epoxy resin.

From the viewpoint of a better adhesiveness to the fiber-reinforced material, the epoxy diluent is preferably used in an amount of 1 to 30 parts by mass, more preferably 2 to 20 parts by mass, with respect to 100 parts by mass of the epoxy resin (A).

Examples of the curing agent (B) for epoxy resins include amine compounds, amide compounds, acid anhydride compounds, and phenolic compounds. Examples of the amine compound include diaminodiphenylmethane, diethylenetriamine, triethylenetetramine, diaminodiphenylsulfone, isophoronediamine, imidazole, BF3-amine complex, and guanidine derivatives. Examples of the amide compound include dicyandiamide, and a polyamide resin synthesized from a dimer of linolenic acid and ethylenediamine. Examples of the acid anhydride compound include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride. Examples of the phenol compound include polyvalent phenol novolak resin synthesized from polyvalent hydroxyl compound and formaldehyde, represented by phenol novolak resin, cresol novolak resin, aromatic hydrocarbon formaldehyde resin modified phenol resin, dicyclopentadienephenol addition type resin, phenol aralkyl resin (Zyroc resin) and resorcinol novolak resin, naphthol aralkyl resin, trimethylolmethane resin, tetraphenylol ethane resin, naphthol novolak resin, naphthol-phenol co-condensed novolak resin, naphthol-cresol co-condensed novolak resin, biphenyl-modified phenol resin (a polyvalent phenol compound in which phenol nuclei are linked by bismethylene groups), biphenyl-modified naphthol resin (a polyvalent naphthol compound in which phenol nuclei are linked by bismethylene groups), aminotriazine-modified phenol resin (a polyvalent phenol compound in which phenol nuclei are linked by melamine, benzoguanamine, etc.), alkoxy group-containing aromatic ring-modified novolak resin (a polyvalent phenol compound in which phenol nuclei and alkoxy group-containing aromatic rings are linked by formaldehyde) and other polyvalent phenol compounds. These curing agents (B) for epoxy resins may be used alone or in combination of two or more.

Among the above curing agents, the amide compounds and amine compounds are preferable, and dicyandiamide and imidazole are more preferable from the viewpoint of high curability and excellent quick curability.

The curing agent (B) for epoxy resins is preferably in the range of 1 to 40 parts by mass, more preferably in the range of 3 to 20 parts by mass, with respect to a total of 100 parts by mass of the epoxy resin and the epoxy resin diluent.

As the curing accelerator (C), a urea compound is preferable from the viewpoint of mechanical properties of the molded article, and an imidazole compound is preferable from the viewpoint of heat resistance.

Examples of the urea compound include 3-phenyl-1,1-dimethylurea, 3-(3,4-dichlorophenyl)-1,1-dimethylurea, 3-(3-chloro-4-methylphenyl)-1,1-dimethylurea, 2,4-bis(3,3-dimethylureaide)toluene, and 1,1'-(4-methyl-1,3-phenylene)bis(3,3-dimethylurea) .

Examples of the imidazole compound include imidazole, 2-phenylimidazole, 2-phenyl-4-methylimidazole, 2-methylimidazole, 2-undecylimidazole, 2-heptadecylimidazole, 1,2-dimethylimidazole, 2-ethyl-4-methylimidazole, 2,4-diamino-6-[2'-methylimidazolyl-(1')]-ethyl-s-triazine, 2,4-diamino-6-[2'-methylimidazolyl-(1')]-ethyl-s-triazine isocyanuric acid adduct, 2-phenyl-4,5-dihydroxymethylimidazole, and 2-phenyl-4-methyl-5-hydroxymethylimidazole.

These curing accelerators (C) may be used alone or in combination of two or more.

The curing accelerator (C) is preferably in the range of 1 to 20 parts by mass, more preferably in the range of 1.5 to 10 parts by mass, with respect to a total of 100 parts by mass of the epoxy resin and the epoxy resin diluent.

The molding material of the invention may contain components other than the aromatic epoxy resin (A), the curing agent (B) for epoxy resins, and the curing accelerator (C), and the molding material preferably contains thermoplastic resin particles (D) from the viewpoint of further improving the moldability.

The thermoplastic resin particles (D) are resin powders containing (meth)acrylic acid ester, diene, and at least one monomer unit selected from monomers copolymerizable with (meth)acrylic acid ester and diene, and preferably containing a thermoplastic resin powder including a core layer and a shell layer as an active ingredient. Examples of the (meth)acrylic acid ester include ethyl (meth)acrylate, n-butyl (meth)acrylate, methyl methacrylate, butyl (meth)acrylate, n-propyl (meth)acrylate, 2-ethylhexyl (meth)acrylate, n-decyl methacrylate, isobutyl (meth)acrylate, n-amyl (meth)acrylate, isoamyl (meth)acrylate, n-hexyl (meth)acrylate, n-octyl (meth)acrylate, and 2-hydroxyethyl (meth)acrylate.

Further, examples of the diene monomer include conjugated diene compounds such as butadiene, isoprene, 1,3-pentadiene, cyclopentadiene and dicyclopentadiene, and nonconjugated diene compounds such as 1,4-hexadiene and ethylidene norbornene.

Examples of the monomers copolymerizable with (meth)acrylic acid ester and diene include aromatic vinyl compounds such as styrene, α-methylstyrene, vinyltoluene, p-t-butylstyrene, and chlorostyrene, (meth)acrylamide compounds such as (meth)acrylamide, N-methylol (meth)acrylamide, and N-butoxymethyl (meth)acrylamide, glycidyl (meth)acrylate, and allyl glycidyl (meth)acrylate, and among these monomers, aromatic vinyl compounds are preferable.

From the viewpoint of further improving the thickening property, the content of the thermoplastic resin particles (D) is preferably in the range of 1 to 20 parts by mass, more preferably in the range of 3 to 9.5 parts by mass, with respect to a total of 100 parts by mass of the epoxy resin and the epoxy diluent.

The molding material of the invention may contain, for example, a thermosetting resin other than an epoxy resin, a thermoplastic resin other than the thermoplastic resin particles (D), a polymerization inhibitor, a filler, a low shrinkage agent, a mold releasing agent, a thickener, a viscosity reducer, a pigment, an antioxidant, a plasticizer, a flame retardant, an antibacterial agent, an ultraviolet stabilizer, a storage stabilizer, a reinforcing material, a light curing agent and the like.

Examples of the thermosetting resin include vinyl ester resin, vinyl urethane resin, unsaturated polyester resin, acrylic resin, phenol resin, melamine resin, and furan resin. In addition, these thermosetting resins may be used alone or in combination of two or more.

Examples of the thermoplastic resin include polyamide resin, polyethylene terephthalate resin, polybutylene terephthalate resin, polycarbonate resin, urethane resin, polypropylene resin, polyethylene resin, polystyrene resin, acrylic resin, polybutadiene resin, polyisoprene resin, and products thereof modified by copolymerization and the like. In addition, these thermoplastic resins may be used alone or in combination of two or more.

Examples of the filler include inorganic compounds and organic compounds, which can be used to adjust physical properties such as strength, elastic modulus, impact strength, and fatigue durability of the molded article.

Examples of the inorganic compound include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, aluminum hydroxide, white crystalline limestone (kansuiseki), zirconium oxide, antimony trioxide, titanium oxide, molybdenum dioxide, and iron powder.

Examples of the organic compound include natural polysaccharide powder such as cellulose and chitin, and synthetic resin powder. As the synthetic resin powder, powder of an organic matter made with hard resin, soft rubber, elastomer, or polymer (copolymer) or the like, or particles having a multilayer structure such as a core-shell type can be used. Specific examples include particles made with butadiene rubber and/or acrylic rubber, urethane rubber, silicon rubber, etc., polyimide resin powder, fluororesin powder, and phenol resin powder. These fillers may be used alone or in combination of two or more.

Examples of the mold releasing agent include zinc stearate, calcium stearate, paraffin wax, polyethylene wax, carnauba wax, and fluorine-based compounds. Fluorine compounds and paraffin wax are preferable. These mold releasing agents may be used alone or in combination of two or more.

Examples of the thickener include metal oxides and metal hydroxide such as magnesium oxide, magnesium hydroxide, calcium oxide and calcium hydroxide, and acrylic resin-based fine particles, and they can be appropriately selected depending on the handleability of the fiber-reinforced molding material of the invention. These thickeners may be used alone or in combination of two or more.

The sheet molding compound (hereinafter abbreviated as "SMC") of the invention contains the aforementioned molding material and a fiber-reinforced material (E) as essential components. The sheet molding compound is excellent in productivity, has diversity in design and bonding of different materials, and is excellent in moldability.

For the fiber-reinforced material (E), fibers cut to a length of 2.5 to 50 mm are used. However, from the viewpoint of further improving the fluidity in a mold during molding, and the appearance and the mechanical properties of the molded article, fibers cut to 5 to 40 mm are more preferable.

Examples of the fiber-reinforced material (E) include glass fiber, carbon fiber, silicon carbide fiber, pulp, linen, cotton, nylon, polyester, acrylic, polyurethane, polyimide, or polyamide fiber made of aramid such as Kevlar and Nomex. Among these materials, carbon fiber is preferable because a high-strength molded article can be obtained.

As the carbon fiber, various types such as polyacrylonitrile type, pitch type, and rayon type can be used. Among these types, polyacrylonitrile type is preferable because carbon fibers having high strength can be easily obtained.

Further, the number of filaments in a fiber bundle used as the carbon fiber is preferably 1,000 to 60,000 from the viewpoint of further improving the resin impregnability and mechanical physical properties of the molded article.

From the viewpoint of further improving the mechanical physical properties of the obtained molded article, the content of the fiber-reinforced material (E) in the SMC component of the invention is preferably in the range of 25 to 80% by mass, more preferably in the range of 40 to 70% by mass, and particularly preferably in the range of 45 to 65% by mass. When the content of the fiber-reinforced material is too low, a high-strength molded article may not be obtained. When the content of the fiber-reinforced material is too high, the resin impregnability of the fiber-reinforced material is insufficient, and the molded article may swell, making it impossible to obtain a high-strength molded article.

Further, it is preferable that the fiber-reinforced material (E) in the SMC of the invention is impregnated with the resin in a state where the fiber directions are random.

Examples of a method for producing the SMC of the invention include a method of using a mixer such as a general mixer, intermixer, planetary mixer, roll mill, kneader, or extruder to mix and/or disperse each component such as the aromatic epoxy resin (A), the curing agent (B) for epoxy resins, the curing accelerator (C), and the thermoplastic resin particles (D), applying the obtained resin composition to carrier films arranged on top and bottom so as to have a uniform thickness, sandwiching the fiber-reinforced material (E) between the resin compositions on the carrier films arranged on top and bottom, then passing the whole between impregnated rolls, applying pressure to impregnate the fiber-reinforced material (E) with the resin composition, and then winding up in a roll or folding in a zigzag. Moreover, it is preferable to carry out aging at room temperature or at a temperature of 20 to 60°C to thicken thereafter. As the carrier film, a polyethylene film, a polypropylene film, a laminated film of polyethylene and polypropylene, polyethylene terephthalate, nylon and the like may be used.

Although the molded article of the invention can be obtained from the SMC, heat compression molding is preferable as the molding method from the viewpoint of excellent productivity and excellent design diversity.

In the heat compression molding, for example, it is possible to use a producing method of weighing the SMC in a predetermined amount, putting the SMC into a mold preheated to 110 to 180°C, performing mold clamping with a compression molding machine to mold the molding material, curing the molded material by keeping a molding pressure of 0.1 to 30 MPa, and then taking out the molded article to obtain a molded article. As specific molding conditions, a molding condition in which a molding pressure of 1 to 20 MPa in the mold at a mold temperature of 120 to 160°C is maintained for 1 to 5 minutes per 1 mm of thickness of the molded article is preferable. From the viewpoint of further improving the productivity, a molding condition in which a molding pressure of 1 to 20 MPa at a mold temperature of 140 to 160°C is maintained for 1 to 3 minutes per 1 mm of thickness of the molded article is further preferable.

The SMC of the invention is excellent in productivity, moldability and the like, and the obtained molded article can be suitably used in automobile members, railway vehicle members, aerospace vehicle members, watercraft members, housing equipment members, sports members, light vehicle members, construction civil engineering members, and casings of office automation equipment, etc.

### Examples

Hereinafter, the invention will be described in more detail with reference to Examples. However, the invention is not limited to these Examples. The FT-IR ATR measurement and average molecular weight were measured under the following measurement conditions.

### [FT-IR (ATR) measurement conditions]

Measuring device: "FT-IR Spectrometer Frontier T" manufactured by PerkinElmer
ATR measurement unit: "Golden Gate diamond" manufactured by Specac
Measuring method: one-time reflection ATR method Crystal: Type IIIA diamond (2 mm × 2 mm)
ATR penetration depth (n = 1.5, 1000 cm⁻¹) :2 um Light source: MIR (8000 to 30 cm⁻¹)
Incident angle: 45°
Detector: MIR TGS (15000 to 370 cm⁻¹)
Measuring range: 4000 to 400 cm⁻¹
Resolution: 4 cm⁻¹
Cumulative number of times: 8 times

### [GPC measurement conditions]

Measuring device: "HLC-8220 GPC" manufactured by Tosoh Corporation
Column: Guard column "HXL-L" manufactured by Tosoh Corporation
   + "TSK-GEL G2000HXL" manufactured by Tosoh Corporation
   + "TSK-GEL G2000HXL" manufactured by Tosoh Corporation
   + "TSK-GEL G3000HXL" manufactured by Tosoh Corporation
   + "TSK-GEL G4000HXL" manufactured by Tosoh Corporation
Detector: RI (differential refractometer)
Data processing: "GPC-8020 Model II Version 4.10" manufactured by Tosoh Corporation
Measuring conditions: Column temperature: 40°C

### Developing solvent: tetrahydrofuran

### Flow velocity: 1.0 ml/min

Standard sample: The following monodispersed polystyrenes with known molecular weights were used in accordance with the measurement manual of the aforementioned "GPC-8020 Model II Version 4.10".

### (Polystyrene used)

"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
Sample: 1.0% by mass of tetrahydrofuran solution in terms of resin solid content filtered with a microfilter (50 µl).

### (Example 1)

An epoxy resin (A-1) ("tetraglycidyl diaminodiphenylmethane" manufactured by Sigma-Aldrich, epoxy equivalent 110 to 130 g/eq, tetrafunctional aromatic epoxy resin) 40 parts by mass, an epoxy resin (A-3) ("EPICLON 840LV" manufactured by DIC Corporation, bisphenol A type, epoxy equivalent: 178 g/eq, number of functional groups: 2) 40 parts by mass, an epoxy diluent ("XY-622" manufactured by ANHUI XINYUAN Chemical Co., Ltd., 1,4-butanediol diglycidyl ether, epoxy equivalent 131 g/eq, number of functional groups: 2) 5 parts by mass, an epoxy diluent ("EX-313" manufactured by Nagase & Co., Ltd., glycerol polyglycidyl ether, number of functional groups: 2 or more) 15 parts by mass, an internal mold releasing agent ("FB-962" manufactured by Daikin Industries, Ltd.) 2 parts by mass, a curing agent for epoxy resins ("DDA5" manufactured by PTI Japan Ltd., dicyandiamide) 8 parts by mass, and a curing accelerator ("OMICURE 52" manufactured by PTI Japan Ltd., 4,4'-methylenebis(phenyldimethylurea)) 5 parts by mass were mixed in three rolls, and thermoplastic resin particles ("F303" manufactured by Aica Kogyo Company, Limited, poly(meth)acrylic acid ester-based organic fine particles) 9 parts by mass were mixed to obtain a resin composition (1) .

### [Preparation of molding material]

The resin composition (1) obtained above was poured between glass plates of a 4 mm spacer and allowed to stand for 2 hours at 80°C as an aging step to obtain a molding material (X-1).

### [Evaluation of compressive hardness]

The compressive hardness of the molding material (X-1) immediately after the aging step and the molding material (X-1) two weeks after the aging step was measured and evaluated under the following conditions.
Device: Force gauge ("FGP-5" manufactured by Nidec-Shimpo Corporation)
Jig: ϕ10 disk shape
Measuring method: compression test at a compression rate of 10 mm/min (sample temperature 25°C)
   Measure the load (N) at the time of 2 mm compression (measure 10 times and evaluate by average value)
A: In the range of 3 to 30 N and has an appropriate hardness.
B: Smaller than 3 N and too flexible, or larger than 30 N and too hard.

### [Preparation of SMC]

The resin composition (1) obtained above was applied onto a laminated film of polyethylene and polypropylene so that the coating amount is 860 g/m² on average, and carbon fibers (hereinafter abbreviated as fiber-reinforced material (E-1)) obtained by cutting carbon fiber roving ("T700SC-12000-50C" manufactured by Toray Industries, Inc.) to 12.5 mm were uniformly dropped thereon from the air such that the carbon fibers had no fiber directionality and had a uniform thickness, and the carbon fiber content was 57% by mass. Similarly, the carbon fibers were sandwiched between films coated with the resin composition (1), impregnated with the resin, and then allowed to stand for 2 hours at 80°C to obtain SMC (Y-1). The basis weight of the SMC was 2 kg/m².

### [Evaluation of film peelability]

The peelability of the SMC (Y-1) obtained above from the polypropylene film at 23°C was checked and was represented by the following four-grade evaluation.
A: No stickness and easy to peel off from the film.
B: Although it is slightly sticky, it can be easily peeled off from the film.
C: Stick, and adhered substances remain when some are peeled off from the film.
D: Adheres to the film.

### [Preparation of molded article]

The film was peeled off from the SMC (Y-1) obtained above. Two layers of 200 mm square were laminated and pressed (10 MPa) at 140°C for 5 minutes using a mold which is a molding plate having a thickness of 2 mm, and was stored at 25°C for 2 days to obtain a molded article (1).

### [Evaluation of curability]

The bending strength of the molded article (1) obtained above was measured in accordance with JIS K7074, and the curability was evaluated according to the following criteria.
A: The bending elastic modulus is 25 GPa or more
B: The bending elastic modulus is less than 25 GPa

### (Examples 2 to 5)

Resin compositions (2) to (5), molding materials (X-2) to (X-5), SMC (Y-2) to (Y-5), and molded articles (2) to (5) were obtained and evaluated in the same manner as in Example 1 except that the compositions and aging times shown in Table 1 were used.

**[Table 1]**

| Table 1 | | | Ex. 1 | Ex. 2 | Ex. 3 | Ex. 4 | Ex. 5 |
|---|---|---|---|---|---|---|---|
| Composition | Epoxy resin | A-1 | 40 | 40 | 0 | 0 | 0 |
| | | A-2 | 0 | 0 | 40 | 40 | 40 |
| | | A-3 | 40 | 40 | 40 | 40 | 40 |
| | Epoxy diluent | XY-622 | 5 | 5 | 5 | 5 | 5 |
| | | EX-313 | 15 | 15 | 15 | 15 | 15 |
| | Thermoplastic resin particles | F-303 | 9 | 9 | 9 | 9 | 9 |
| | Internal mold releasing agent | FB-962 | 2 | 2 | 2 | 2 | 2 |
| | Curing agent for epoxy resins | DICY7 | 8 | 8 | 8 | 8 | 8 |
| | Curing accelerator | B-605-IM | 5 | 5 | 5 | 5 | 2 |
| Aging time (h) | | | 2 | 4 | 2 | 4 | 4 |
| Transmittance ratio α | | | 1.6 | 2.3 | 1.4 | 1.8 | 1.3 |
| Compressive hardness (immediately after aging) | | | A | A | A | A | A |
| Compressive hardness (two weeks after aging) | | | A | A | A | A | A |
| Film peelability | | | A | A | A | A | A |
| Curability | | | A | A | A | A | A |

Epoxy resin (A-2) in the table: "EPICLON EXA-7250" manufactured by DIC Corporation, trisphenol methane type, epoxy equivalent: 162 g/eq, trifunctional or higher functional aromatic epoxy resin

### (Comparative Examples 1 to 3)

Resin compositions (R1) to (R3), molding materials (RX-1) to (RX-3), SMC (RY-1) to (RY-3), and molded articles (R1) to (R3) were obtained and evaluated in the same manner as in Example 1 except that the compositions and aging times shown in Table 2 were used.

**[Table 2]**

| Table 2 | | | C. E. 1 | C.E. 2 | C.E. 3 |
|---|---|---|---|---|---|
| Composition | Epoxy resin | A-1 | 40 | 40 | 40 |
| | | A-2 | 0 | 0 | 0 |
| | | A-3 | 40 | 40 | 40 |
| | Epoxy diluent | XY-622 | 5 | 5 | 5 |
| | | EX-313 | 15 | 15 | 15 |
| | Thermoplastic resin particles | F-303 | 9 | 9 | 9 |
| | Internal mold releasing agent | FB-962 | 2 | 2 | 2 |
| | Curing agent for epoxy resins | DICY7 | 8 | 8 | 8 |
| | Curing accelerator | B-605-IM | 5 | 5 | 1 |
| Aging time (h) | | | 6 | 1 | 4 |
| Transmittance ratio α | | | 3.1 | 0.9 | 0.9 |
| Compressive hardness (immediately after aging) | | | B | B | B |
| Compressive hardness (two weeks after aging) | | | B | A | B |
| Film peelability | | | A | B | B |
| Curability | | | A | B | B |

It was found that the molding materials of the invention of Examples 1 to 5 had a compressive hardness excellent in moldability, and were excellent in film peelability and curability even in the case of SMC.

In contrast, Comparative Example 1 is an example in which the ratio of transmittance (transmittance ratio α) at 910 cm⁻¹ to transmittance at 1510 cm⁻¹ in FT-IR ATR measurement is greater than 3, which is the upper limit. However, it was found that the moldability was poor because the compressive hardness was too low.

On the other hand, Comparative Examples 2 and 3 are examples in which the transmittance ratio α is smaller than 1, which is the lower limit. However, it was found that the moldability was poor and the film peelability and curability were also insufficient because the compressive hardness was too high.

## Claims

1. A molding material which uses, as essential raw materials, (A) an aromatic epoxy resin, (B) a curing agent for epoxy resins, and (C) a curing accelerator, wherein the molding material has a ratio of transmittance at 910 cm⁻¹ to transmittance at 1510 cm⁻¹ (910 cm-1/1510 cm⁻¹) in FT-IR ATR measurement in a range of 1 to 3.

2. The molding material according to claim 1, wherein the aromatic epoxy resin(A) contains a bifunctional aromatic epoxy resin (A') and a trifunctional or higher functional aromatic epoxy resin (A").

3. The molding material according to claim 1 or 2, further containing (D) thermoplastic resin particles.

4. A molding material containing a thickener of an epoxy resin composition, which uses, as essential raw materials, (A) an aromatic epoxy resin, (B) a curing agent for epoxy resins, and (C) a curing accelerator, wherein the thickener has a ratio of transmittance at 910 cm⁻¹ to transmittance at 1510 cm⁻¹ (910 cm⁻¹/1510 cm⁻¹) in FT-IR ATR measurement in a range of 1 to 3.

5. A sheet molding compound containing the molding material according to any one of claims 1 to 4 and (E) a fiber-reinforced material.

6. A molded article of the sheet molding compound according to claim 5.
